# EUROPÄISCHE PATENTSCHRIFT

(11) **EP 1 518 308 B1**
(45) Veröffentlichungstag und Bekanntmachung des Hinweises auf die Patenterteilung: **08.03.2006**
(21) Anmeldenummer: 03762616.5
(22) Anmeldetag: 03.07.2003
(51) Int. Cl.: H02G 3/22, H02G 3/08, H01B 17/30

(54) **FLUIDDICHTE KABELDURCHFÜHRUNG**
FLUID-TIGHT CABLE DUCT
PASSE-CABLE ETANCHE AUX FLUIDES

(30) Priorität: 03.07.2002 DE 20210296 U
(43) Veröffentlichungstag der Anmeldung: 30.03.2005
(73) Patentinhaber: era-contact GmbH, 75015 Bretten (DE)
(72) Erfinder: DITTES, Reinhold, 75015 Bretten (DE); KAINZ, Andreas, 74211 Leingarten (DE)
(74) Vertreter: Schaumburg, Thoenes, Thurn, Landskron
(86) Internationale Anmeldenummer: PCT/EP2003/007134
(87) Internationale Veröffentlichungsnummer: WO 2004/006401

(56) Entgegenhaltungen:
- EP-A- 1 158 636
- DE-A- 3 232 050
- DE-A- 19 621 321
- DE-U- 20 210 296
- US-A- 5 278 357

## Beschreibung

Die vorliegende Erfindung betrifft eine fluiddichte, insbesondere öldithte. Kabeldurchführung mit einem Dürchführungskörper, der eine einem Fluid ausgesetzte Innenseite, eine vom Fluid getrennte Außenseite und mindestens einen Kabelkanal hat, durch den mindestens eine durch eine Litze gebildete elektrische Leitung von der Innenseite des Durchführungskörpers zu dessen Außenseite geführt wird, wobei im Kabelkanal ein Dichtelement angeordnet ist, das von einer der Leitungsanzahl entsprechenden Anzahl von Einzelkanälen durchsetzt ist, durch die Leitungen einzeln geführt werden, und wobei die Leitungen jeweils aus zwei Leitungsabschnitten bestehen, die durch ein elektrisch leitendes Verbindungsstück miteinander verbunden sind. Eine solche Kabeldurchführung ist z.B. aus der DE 32 32 050A1 und der US 5,278,357 A bekannt. Letztere wird als nächstliegender Stand der Technik angesehen.

Auch aus dem Gebrauchsmuster DE 200 09 530 ist eine Kabeldurchführung bekannt, die dazu dient, elektrische Leitungen öldicht aus dem Inneren eines Motor- oder Getriebegehäuses nach außen zu führen. Die gezeigte Kabeldurchführung beinhaltet einen Durchführungskörper, der zum Verschließen einer Öffnung im Motor- oder Getriebegehäuse bestimmt ist, wobei die lnnenseite des Durchführungskörpers dem ÖI ausgesetzt ist. Im Durchführungskörper ist mindestens ein die lnnen- und Außenseite verbindender Kabelkanal ausgebildet, durch den eine elektrische Leitung geführt ist, deren Außenisolation auf einem Teil der Länge des Kabelkanals durch eine Kunstharzvergußmasse ersetzt ist. Die Kunststoffvergußmasse soll verhindern, daß Öl durch den Kabelkanal von der Innenseite des Durchführungskörpers zu dessen Außenseite gelangt.

Es hat sich jedoch gezeigt, daß die in den oben genannten Schriften beschriebene Kabeldurchführung nicht vollkommen öldicht ist. Zum einen kann heißes und daher sehr dünnflüssiges Öl durch Kapillarwirkung ins innere der Litze eindringen und im Inneren der Litze durch den Kabelkanal gelangen. Zum anderen neigt die Vergußmasse mit der der Durchführungskörper ausgegossen ist, infolge eines Alterungsprozesses zum Schrumpfen, so daß sich ein Spalt zwischen der Litze und der Vergußmasse bzw. zwischen der Vergußmasse und der Kabelkanalwand bilden kann, durch den ebenfalls Öl von der Innenseite des Durchführungskörpers zur Außenseite gelangen kann.

Der Erfindung liegt die Aufgabe zugrunde, eine Kabeldurchführung der eingangs genannten Art anzugeben, deren Fluiddichtheit besser ist als beim Stand der Technik.

Diese Aufgabe wird bei einer Kabeldurchführung der eingangs genannten Art dadurch gelöst, daß das Verbindungsstück auf mindestens einem Teil seiner Länge einen massiven Querschnitt hat und zumindest mit einem Teil seiner Lange im Einzelkanal des Dichtelementes untergebracht ist. Aufgrund des massiven Querschnittes kann das Öl nicht durch das Innere des Verbindungsstückes gelangen. Anders.als beim Stand der Technik, wo das Öl durch eine durchgehende Litze von der Innenseite des Durchführungskörpers zur Außenseite kriechen konnte, kommt das im inneren der Litze befindliche Öl bei der erfindungsgemäßen Kabeldurchführung am Verbindungsstück nicht vorbei. Da das Verbindungsstück aber zumindest mit einem Teil seiner Länge im Einzelkanal des Dichtelementes untergebracht ist, kommt auch außen kein Öl am Verbindungsstück vorbei.

Das Verbindungsstück wird vorzugsweise aus einem Stift gebildet, an dessen Enden jeweils eine Crimphülse angeordnet ist. Mit einem derartigen Verbindungsstück können die zwei Leitungsabschnitte einfach und kostengünstig miteinander verbunden werden.

Das Dichtelement besteht vorzugsweise aus einem Elastomer. Ein Elastomer hat bessere Dichtungseigenschaften als eine Vergußmasse, wie sie beim Stand der Technik verwendet wird, weil diese infolge eines Alterungsprozesses schrumpft. Allerdings können die Kabel mit einer Vergußmasse sicherer in Position gehalten werden, als dies durch die bloße elastische Umschließung in den Einzeikanälen des Dichtelementes gelingt. Daher ist der Kabelkanal in einer bevorzugten Weiterbildung in einem an die Innenseite des Dichtelementes anschließenden Abschnitt mit Vergußmasse ausgegossen, wodurch die Leitungen zugfest in Position gehalten werden. Außerdem bietet der ausgegossene Abschnitt eine grobe Abdichtung, die bereits einen Großteil des Fluids vom Dichtelement fernhält.

Vorzugsweise verengt sich der ausgegossene innere Abschnitt des Kabelkanals - in axialer Richtung von außen nach innen betrachtet - an mindestens einer Stelle. Dadurch wird gewährleistet, daß die Vergußmasse nicht aus dem Kabelkanal herausfallen kann, selbst wenn sie infolge eines Alterungsprozesses etwas schrumpfen sollte. Ferner ist im Kabelkanal vorzugsweise ein erster Absatz ausgebildet, von dem ein Ringsteg in axialer Richtung in den ausgegossenen Abschnitt des Kabelkanals hineinragt. Durch diesen Ringsteg wird die Vergußmasse in einen - bezogen auf die Kabelkanalachse - radial inneren und radial äußeren Abschnitt unterteilt. Im Zuge der Alterung der Vergußmasse schrumpft deren radial äußerer Abschnitt auf den Ringsteg auf. Dadurch wird einerseits eine Spaltbildung zwischen dem radial äußeren Abschnitt der Vergußmasse und dem Ringsteg, andererseits ein zu ausgeprägtes Schrumpfen der Vergußmasse als ganzem verhindert, so daß sie sich nicht vollständig vom Kabelkanal 20 ablösen kann.

Vorzugsweise haben die Einzelkanäle im Dichtelement jeweils mindestens einen verengten Abschnitt. Im verengten Abschnitt ergibt sich eine besonders gute Abdichtung zwischen Leitung und Dichtelement. Ferner verhindert der verengte Abschnitt, daß Regen- oder Spritzwasser von außen in das Dichtelement eindringen und unterschiedliche Leitungen kurzschließen kann.

Vorzugsweise hat das Dichtelement einen sich verjüngenden Abschnitt und der Kabelkanal einen - in axialer Richtung von außen nach innen betrachtet - sich verengenden Abschnitt, in den das Dichtelement von außen mit seinem sich verjüngenden Abschnitt hineingepreßt ist. Ferner hat das Dichtelement vorzugsweise ein an seinem nach axial außen gewandten Ende einen nach radial außen überstehenden Abschnitt und ist im Kabelkanal ein zweiter Absatz ausgebildet, auf dem der überstehende Abschnitt aufliegt. In einer vorteilhaften Weiterbildung ist auf dem Absatz eine die Kabelkanalachse umgebende geschlossene Dichtlippe ausgebildet.

Vorzugsweise hat die Kabeldurchführung ferner ein Kabelführungsrohr mit einem Flansch zu dessen Befestigung außen am Durchführungskörper, wobei der Innendurchmesser des Flansches geringer ist als der Durchmesser des überstehenden Abschnittes des Dichtelementes. Dadurch wird das Dichtelement beim Befestigen des Kabelführungsrohrs durch dessen Flansch in den Kabelkanal gepreßt, was wiederum zu einer besseren Dichtung führt. Vorzugsweise ist ferner auf dem Flansch eine die Kabelkanalachse umgebende geschlossene Dichtlippe ausgebildet.

Weitere Vorteile und Merkmale der erfindungsgemäßen Lösung ergeben sich aus der folgenden Beschreibung, in der die Erfindung anhand eines Ausführungsbeispieles unter Bezugnahme auf die beigefügten Zeichnungen erläutert wird. Darin zeigen:
- Figur 1: eine erfindungsgemäße Kabeldurchführung in einem die Kabelkanalachse enthaltenden Querschnitt,
- Figur 2: einen vergrößerten Ausschnitt aus Figur 1,
- Figur 3: eine Draufsicht auf die Kabeldurchführung von Figur 1 und
- Figur 4: ein Dichtelement im Teilquerschnitt mit hindurchgeführten elektrischen Leitungen,

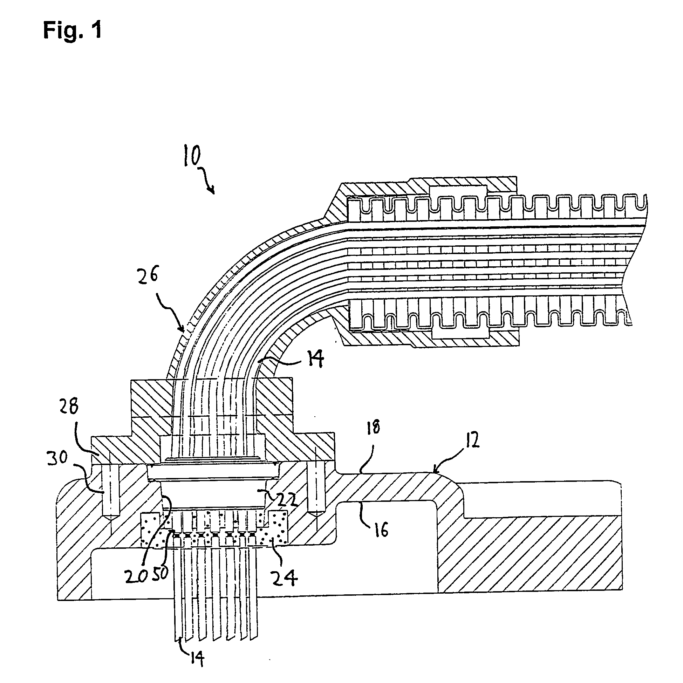

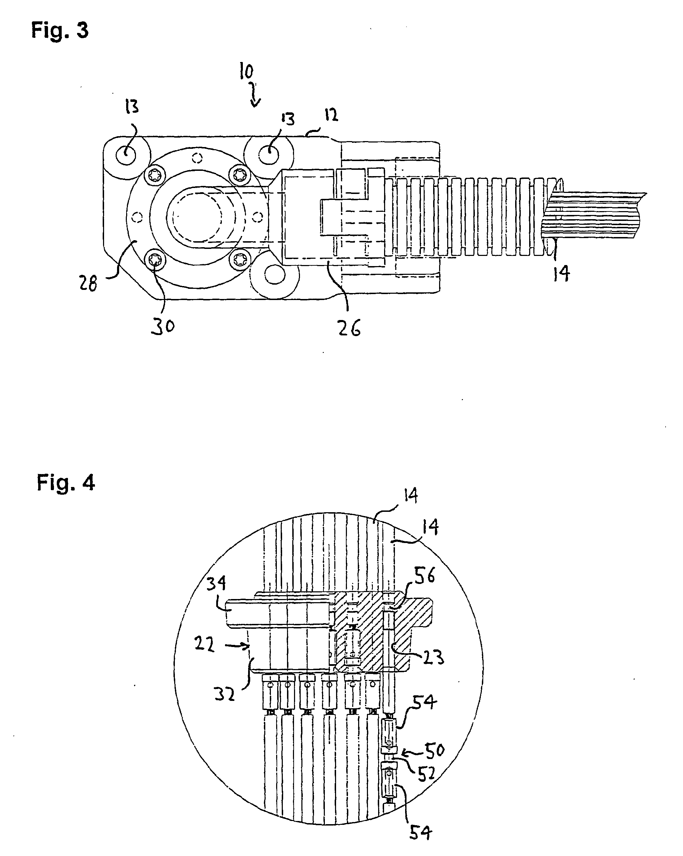

Eine erfindungsgemäße Kabeldurchführung 10 ist in Figur 1 im Querschnitt und in Figur 3 in einer Draufsicht gezeigt. Die Kabeldurchführung hat einen Durchführungskörper 12, mit dem eine Öffnung in einem Motor- oder Getriebegehäuse öldicht abgedeckt wird, und durch den elektrische Leitungen 14 geführt werden. Zur Befestigung am Motor- bzw. Getriebegehäuse dienen nicht gezeigte Schraubbolzen, die durch Öffnungen 13 (siehe Fig. 3) im Durchführungskörper 12 gesteckt werden. Der Durchführungskörper 12 hat eine dem Öl ausgesetzte Innenseite 16 und eine vom Öl getrennte Außenseite 18. Die elektrischen Leitungen 14 werden durch einen Kabelkanal 20 von der Innenseite 16 zur Außenseite 18 des Durchführungskörpers 12 geführt. Mit "Kabelkanal" ist in der vorliegenden Schrift ganz allgemein die Verbindung zwischen der Innenseite und der Außenseite eines Durchführungskörpers gemeint, für dessen Form ausdrücklich keine Einschränkung gelten soll.

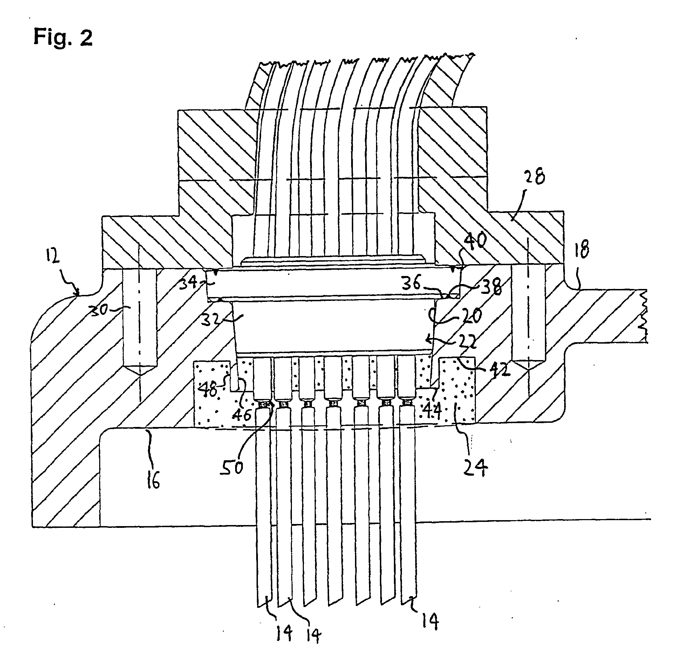

Im Kabelkanal 20 ist ein Dichtelement 22 angeordnet, das in Figur 1 der Übersichtlichkeit halber nicht im Querschnitt gezeigt ist. Im Dichtelement 22 sind Einzelkanäle 23 ausgebildet, durch die die Leitungen 14 einzeln geführt sind (siehe Figur 4). Die Durchführung der Leitungen 14 durch das Dichtelement 22 wird unten unter Bezugnahme auf Figur 4 im Detail erläutert. Der Kabelkanal 20 ist in einem vom Dichtelement 22 aus gesehenen inneren Abschnitt, d.h. in der Darstellung von Figur 1 unteren Abschnitt 24 mit einer Vergußmasse (in Fig. 1 und 2 gepunktet dargestellt) ausgegossen. Beim Austreten aus dem Durchführungskörper 12 werden die Leitungen 14 in ein Kabelführungsrohr 26 geführt, das mit einem Flansch 28 mit Schraubbolzen 30 am Durchführungskörper 12 angeflanscht ist.

In Figur 2 ist ein vergrößerter Ausschnitt von Figur 1 gezeigt. Wie darin zu sehen, hat das Dichtelement 22 einen konischen Abschnitt 32 und einen nach radial außen überstehenden Abschnitt 34. Im Kabelkanal 20 ist ein konischer Abschnitt ausgebildet, in den der konische Abschnitt 32 formflüssig hineingepreßt ist. Im Kabelkanal 20 ist ferner ein Absatz 36 ausgebildet, auf dem der überstehende Abschnitt 34 des Dichtelementes 22 aufliegt. Wie in Figur 2 zu sehen, ist der Innendurchmesser des Flansches 28 geringer als der Durchmesser des überstehenden Abschnittes 34 des Dichtelementes 22. Daher wird das Dichtelement 22 in den Kabelkanal 20 gepreßt, wenn das Kabelführungsrohr 26 mit seinem Flansch 28 auf den Durchführungskörper 12 geschraubt wird, wodurch das Dichtelement 22 mit seinem konischen Abschnitt 32 eng an der Wand des Kabelkanals 20 anliegt und diesen öldicht verschließt. Ferner sind am Absatz 36 und am Flansch 28 umlaufende Dichtlippen 38 bzw. 40 ausgebildet, die ebenfalls verhindern, daß Öl zwischen dem Dichtelement 22 und dem Kabelkanal 20 von innen nach außen gelangt.

Wie oben bereits erwähnt ist ein vom Dichtelement 22 aus betrachtet innerer Abschnitt 24 des Kabelkanals 20 mit Vergußmasse ausgegossen. Die Leitungen 14 sind in die Vergußmasse eingegossen und werden durch diese in Position gehalten. Ferner wird der Kabelkanal bereits durch die Vergußmasse bis zu einem gewissen Grade abgedichtet, so daß nur kleine Mengen Öl überhaupt bis zum Dichtelement 22 vordringen können.

Während die Vergußmasse sehr gut dazu geeignet ist, die Leitungen 14 festzuhalten, kann sie den Kabelkanal 20 nicht dauerhaft öldicht zu verschließen. Das liegt daran, daß sie hohen Temperaturschwankungen ausgesetzt ist, dadurch relativ rasch altert und dabei schrumpft, wodurch sich Spalte zwischen dem Kabelkanal 20 und der Vergußmasse bilden können. Bei der erfindungsgemäßen Kabeldurchführung 10 wurde dem Schrumpfen der Vergußmasse durch die Formgebung des ausgegossenen Abschnittes 24 des Kabelkanals 20 Rechnung getragen. Wie in Figur 2 zu sehen, ist im ausgegossenen Abschnitt des Kabelkanals 20 ein Absatz 42 gebildet, auf dem ein umlaufender Ringsteg 44 ausgebildet ist. An der Innenseite 46 des Ringstegs 44 ist die oben beschriebene konische Form des Kabelkanals 20 fortgesetzt. Das bedeutet, daß sich der ausgegossene Abschnitt 24 des Kabelkanals 20 - in axialer Richtung von außen nach innen betrachtet - in dem vom Ringsteg 44 eingeschlossenen Bereich verengt. Dadurch wird verhindert, daß die Vergußmasse aus dem Kabelkanal 20 herausfallen kann, selbst wenn sie stark schrumpfen sollte. Der Ringsteg 44 hat unter anderem den Zweck, daß die Vergußmasse in ihrem Alterungsprozeß auf die Ringstegaußenseite 48 aufschrumpft, so daß sich zumindest an der Grenzfläche der Vergußmasse und der Ringstegaußenseite 48 eine Engstelle für das Öl ergibt, die es nur schwer passieren kann.

In Figur 4 ist das Dichtelement 22 in einem Teilquerschnitt gezeigt, durch das die elektrischen Leitungen 14 in Einzelkanälen 23 geführt sind. Wie in Figur 4 zu sehen, bestehen die elektrischen Leitungen aus jeweils zwei Leitungsabschnitten, die durch ein Verbindungsstück 50 miteinander verbunden sind. Dabei ist jeweils eine Hälfte des Verbindungsstückes im Einzelkanal 23 des Dichtelementes 22 angeordnet. Die in der Darstellung von Figur 4 am weitesten rechts liegende Leitung ist aus Gründen der besseren Darstellung des Verbindungsstückes 50 etwas nach unten gezogen.

Die Verbindungsstücke 50 bestehen aus einem Stift 52, an dessen Enden jeweils eine Crimphülse 54 zum Befestigen der Leitungsabschnitte angeordnet ist. Der Stift 52 hat einen massiven Querschnitt und dient daher als Kapillarsperre für Öl, das sich im Inneren des inneren Leitungsabschnittes ausbreitet. Diese Kapillarsperre stellt eine wesentliche Verbesserung gegenüber dem Stand der Technik dar, bei dem eine durchgängige Litze von der Innenseite des Durchführungskörpers zur Außenseite geführt wurde und Öl durch die Kapillarwirkung der Litze nach außen gelangen konnte.

Die Verbindungsstücke 50 verschließen die Einzelkanäle 23 dauerhaft öldicht, da das Dichtelement 22 aus einem hochelastischen Material hergestellt ist. Wie in Figur 4 weiter zu sehen, befindet sich in einem jeden Einzelkanal 23 ferner eine Verengung 56, in der die Isolierung der nach außen führenden Leitungsstücke eingequetscht ist. Dadurch wird verhindert, daß möglicherweise in das Kabelführungsrohr 26 eindringendes Regen- oder Spritzwasser von außen in die Einzelkanäle 23 des Dichtelementes eindringen und zu einem Kurzschluß zwischen unterschiedlichen Leitungen führen könnte.

### Bezugszeichenliste

- 10: Kabeldurchführung
- 12: Durchführungskörper
- 13: Öffnung für Schraubbolzen
- 14: Leitung
- 16: Innenseite des Durchführungskörpers 12
- 18: Außenseite des Durchführungskörpers 12
- 20: Kabelkanal
- 22: Dichtelement
- 23: Einzelkanal
- 24: ausgegossener Abschnitt des Kabelkanals 20
- 26: Kabelführungsrohr
- 28: Flansch
- 30: Schraubbolzen
- 32: konischer Abschnitt des Dichtelementes 22
- 34: überstehender Abschnitt des Dichtelementes 22
- 36: Absatz
- 38: Dichtlippe
- 40: Dichtlippe
- 42: Absatz
- 44: Ringsteg
- 46: Innenseite des Ringsteges 44
- 48: Außenseite des Ringsteges 44
- 50: Verbindungsstück
- 52: Stift
- 54: Crimphülse
- 56: Verengung im Einzelkanal 23

## Patentansprüche

1. Fluiddichte, insbesondere öldichte Kabeldurchführung (10) mit einem Durchführungskörper (12), der eine einem Fluid ausgesetzte Innenseite (16), eine vom Fluid getrennte Außenseite (1-8) und mindestens einen Kabelkanal (20) hat, durch den mindestens eine durch eine Litze gebildete elektrische Leitung (14) von der Innenseite (16) zur Außenseite (18) des Durchführungskörpers (12) geführt wird, wobei im Kabelkanal (20) ein Dichtelement (22) angeordnet ist, das von einer der Leitungsanzahl entsprechenden Anzahl von Einzelkanälen (23) durchsetzt ist, durch die Leitungen (14) einzeln geführt werden, und wobei die Leitungen (14) aus jeweils zwei Leitungsabschnitten bestehen, die durch ein elektrisch leitendes Verbindungsstück (50) miteinander verbünden sind, **dadurch gekennzeichnet, daß** das Verbindungsstück (50) auf mindestens einem Teil (52) seiner Länge einen massiven Querschnitt hat und zumindest mit einem Teil seiner Länge im Einzelkanal (23) des Dichtelementes (22) untergebracht ist.

2. Kabeldurchführung (10) nach Anspruch 1, **dadurch gekennzeichnet, daß** das Verbindungsstück (50) aus einem Stift (52) gebildet wird, an dessen Enden jeweils eine Crimphülse (54) angeordnet ist.

3. Kabeldurchführung (10) nach Anspruch 1 oder 2, **dadurch gekennzeichnet, daß** das Dichtelement (22) aus einem Elastomer besteht.

4. Kabeldurchführung (10) nach einem der Ansprüche 1 bis 3, **dadurch gekennzeichnet, daß** der Kabelkanal (20) in einem an die Innenseite des Dichtelementes (22) anschließenden Abschnitt (24) mit Vergußmasse ausgegossen ist.

5. Kabeldurchführung. (10) nach Anspruch 4, **dadurch gekennzeichnet, daß** sich der ausgegossene innere Abschnitt (24) des Kabelkanals (20) in axialer Richtung von außen nach innen betrachtet - an mindestens einer Stelle (46) verengt.

6. Kabeldurchführung (10) nach Anspruch 4 oder 5, **dadurch gekennzeichnet, daß** im Kabelkanal (20) ein erster Absatz (42) ausgebildet ist, von dem ein Ringsteg (44) in axialer Richtung in den ausgegossenen Abschnitt (24) des Kabelkanals (20) hineinragt.

7. Kabeldurchführung (10) nach einem der vorhergehenden Ansprüche, **dadurch gekennzeichnet, daß** die Einzelkanäle (23) im Dichtelement (22) jeweils mindestens einen verengten Abschnitt (56) haben.

8. Kabeldurchführung (10) nach einem der vorhergehenden Ansprüche, **dadurch gekennzeichnet, daß** das Dichtelement (22) einen sich verjüngenden Abschnitt (32) hat und der Kabelkanal (20) einen - in axialer Richtung von außen nach innen betrachtet - sich verengenden Abschnitt hat, in den das Dichtelement (20) von außen mit seinem sich verjüngenden Abschnitt (32) hineingepreßt ist.

9. Kabeldurchführung (10) nach einem der vorhergehenden Ansprüche, **dadurch gekennzeichnet, daß** das Dichtelement (22) an seinem nach axial außen gewandten Ende einen nach radial außen überstehenden Abschnitt (34) hat und im Kabelkanal (20) ein zweiter Absatz (36) ausgebildet ist, auf dem der überstehende Abschnitt (34) aufliegt.

10. Kabeldurchführung (10) nach Anspruch 9, **dadurch gekennzeichnet, daß** auf dem zweiten Absatz (36) eine die Kabelkanalachse umgebende geschlossene Dichtlippe (38) ausgebildet ist.

11. Kabeldurchführung (10) nach Anspruch 9 oder 10, **gekennzeichnet durch** ein Kabelführungsrohr (26) mit einem Flansch (28) zu dessen Befestigung außen am Durchführungskörper (12), wobei der Innendurchmesser des Flansches (28) geringer ist als der Durchmesser des überstehenden Abschnittes (34) des Dichtelementes (22).

12. Kabeldurchführung (10) nach Anspruch 11, **dadurch gekennzeichnet, daß** auf dem Flansch (28) eine die Kabelkanalachse umgebende geschlossene Dichtlippe (40) ausgebildet ist.

## Claims

1. Liquid-tight, in particular oil-tight, cable guide (10) with a feedthrough body (12) which has an inner side (16) exposed to a liquid, an outer side (18) separated from the liquid and at least one cable duct (20), through which at least one electric cable (14) formed by a stranded wire is guided from the inner side (16) to the outer side (18) of the feedthrough body (12) wherein a sealing element (22) is arranged in the cable duct (20), through which sealing element (22) a number of individual ducts (23) corresponding to the number of cables pass, through which individual ducts (23) cables (14) are individually guided, and wherein the cables (14) consist of two cable sections which are interconnected by an electrically conductive connecting member (50), **characterised in that** the connecting member (50) has a solid cross-section on at least a part (52) of its length and is housed with at least a part of its length in the individual duct (23) of the sealing element (22).

2. Cable guide (10) according to claim 1, **characterised in that** the connecting member (50) is formed by a pin (52), on each end of which a crimped sleeve (54) is arranged.

3. Cable guide (10) according to claim 1 or 2, **characterised in that** the sealing element (22) is made of an elastomer.

4. Cable guide (10) according to one of the claims 1 to 3, **characterised in that** the cable duct (20) is cast with a sealing compound in a section (24) connecting to the inner side of the sealing element (22).

5. Cable guide (10) according to claim 4, **characterised in that** the cast inner section (24) of the cable duct (20) becomes narrower - as seen in axial direction from externally to internally - at at least one point (46).

6. Cable guide (10) according to claim 4 or 5, **characterised in that** a first ledge (42) is formed in the cable duct (20) from which an annular web (44) projects axially into the cast section (24) of the cable duct (20).

7. Cable guide (10) according to one of the preceding claims, **characterised in that** the individual ducts (23) in the sealing element (22) each have at least one narrowed section (56).

8. Cable guide (10) according to one of the preceding claims, **characterised in that** the sealing element (22) has a tapering section (32) and the cable duct (20) has - as observed axially from externally to internally - a narrowing section into which the sealing element (20) is pressed from externally with its tapering section (32).

9. Cable guide (10) according to one of the preceding claims, **characterised in that** the sealing element (22) has a radially outwardly overhanging section (34) on its axially outwardly facing end and a second ledge (36) is formed in the cable duct (20), on which ledge (36) the overhanging section (34) lies.

10. Cable guide (10) according to claim 9, **characterised in that** a closed sealing lip (38) surrounding the axis of the cable duct is formed on the second ledge (36).

11. Cable guide (10) according to claim 9 or 10, **characterised by** a cable guiding pipe (26) with a flange (28) for fixing it externally to the feedthrough body (12) wherein the inner diameter of the flange (28) is smaller than the diameter of the overhanging section (34) of the sealing element (22).

12. Cable guide (10) according to claim 11, **characterised in that** a closed sealing lip (40) surrounding the axis of the cable duct is formed on the flange (28).

## Revendications

1. Traversée de câble (10) étanche aux fluides, en particulier étanche à l'huile, ladite traversée de câble comportant un corps de traversée (12) qui comporte un côté intérieur (16) exposé à un fluide, un côté extérieur (18) séparé du fluide, et au moins un canal de câble (20) permettant de faire passer du côté intérieur (16) au côté extérieur (18) du corps de traversée (12) au moins une ligne électrique (14) formée par un fil toronné, un élément d'étanchéité (22) étant agencé dans le canal de câble et étant traversé par une pluralité de canaux individuels (23) correspondant au nombre de lignes et lesdits canaux individuels permettant le passage individuel des lignes (14) qui sont constituées chacune de deux portions de ligne reliées entre elles par une pièce de raccordement (50) électriquement conductrice, **caractérisée en ce que** la pièce de raccordement (50) a une section massive sur au moins une partie (52) de sa longueur, et est insérée sur au moins une partie de sa longueur dans le canal individuel (23) de l'élément d'étanchéité (22).

2. Traversée de câble (10) selon la revendication 1, **caractérisée en ce que** la pièce de raccordement (50) est formée d'une tige (52) à chaque extrémité de laquelle est placée une douille Crimp (54).

3. Traversée de câble (10) selon la revendication 1 ou 2, **caractérisée en ce que** l'élément d'étanchéité (22) est constitué d'un élastomère.

4. Traversée de câble (10) selon l'une des revendications 1 à 3, **caractérisée en ce que** le canal de câble (20) est scellé avec une masse de scellement dans une portion (24) raccordée au côté intérieur de l'élément d'étanchéité (22).

5. Traversée de câble (10) selon la revendication 4, **caractérisée en ce que** la portion intérieure scellée (24) du canal de câble (20) s'amincit en au moins un endroit (46) lorsque l'on observe dans une direction axiale allant de l'extérieur vers l'intérieur.

6. Traversée de câble (10) selon la revendication 4 ou 5, **caractérisée en ce qu'**un premier gradin (42) est conformé dans le canal de câble (20), une nervure annulaire (44) saillant axialement dudit gradin dans la portion scellée (24) du canal de câble (20).

7. Traversée de câble (10) selon l'une des revendications précédentes, **caractérisée en ce que** les canaux individuels (23) ménagés dans l'élément d'étanchéité (22) comportent chacun au moins une portion amincie (56).

8. Traversée de câble (10) selon l'une des revendications précédentes, **caractérisée en ce que** l'élément d'étanchéité (22) comporte une portion amincie (32), et le canal de câble (20) comporte une portion s'amincissant axialement de l'extérieur vers l'intérieur dans laquelle la portion amincie (32) de l'élément, d'étanchéité (20) est introduite par pressage depuis l'extérieur.

9. Traversée de câble (10) selon l'une des revendications précédentes, **caractérisée en ce que** l'élément d'étanchéité (22) comporte, à son extrémité dirigée axialement vers l'extérieur, une portion (34) saillant radialement vers l'extérieur, et **en ce qu'**un deuxième gradin (36) est conformé dans le canal de câble (20), la portion saillante (34) portant contre ledit deuxième gradin.

10. Traversée de câble (10) selon la revendication 9, **caractérisée en ce qu'**une lèvre d'étanchéité fermée (38), s'étendant autour de l'axe du canal de câble, est conformée sur le deuxième gradin (36).

11. Traversée de câble (10) selon la revendication 9 ou 10, **caractérisée par** un tube de passage de câble (26) comportant une bride (28) destinée à fixer ledit tube de passage de câble extérieurement au corps de traversée (12), le diamètre intérieur de la bride (28) étant inférieur au diamètre extérieur de la portion saillante (34) de l'élément d'étanchéité (22).

12. Traversée de câble (10) selon la revendication 11, **caractérisée en ce qu'**une lèvre d'étanchéité fermée (40), s'étendant autour de l'axe du canal de câble, est conformée sur la bride (28).
